# EUROPEAN PATENT SPECIFICATION

(11) **EP 1 227 487 B1**
(45) Date of publication and mention of the grant of the patent: **25.11.2009**
(21) Application number: 01306032.2
(22) Date of filing: 12.07.2001
(51) Int. Cl.: G11B 20/18, G11B 27/10, G11B 27/19, G11B 27/30, G11B 27/36

(54) **Method for detecting violation of block boundary and apparatus therefor**
Verfahren zur Detektion der Verletzung von Blockgrenzen und Gerät dafür
Procédé de détection de violation d'une limite d'un bloc et dispositif associé

(30) Priority: 22.01.2001 KR 2001003582
(43) Date of publication of application: 31.07.2002
(73) Proprietor: SAMSUNG ELECTRONICS CO., LTD., Suwon-City, Kyungki-do (KR)
(72) Inventor: Eom, Woo-sik, 914-1501 Pyuckjeokgol, Paldal-gu, Suwon-si, Gyeonggi-do (KR)
(74) Representative: Robinson, Ian Michael

(56) References cited:
- EP-A- 0 926 664
- US-A- 6 137 756

## Description

The present invention relates to a disk recording apparatus, and more particularly, to a block boundary violation detecting method for preventing abnormal recording by detecting inconsistencies between an encoding block and an error correction code (ECC) block on a disk and an apparatus therefor.

In a disk recording apparatus such as a DVD-R/RW drive, a DVD+RW drive, and a CD-R/RW drive, an encoding block must be recorded according to an error correction code (ECC) block on a disk, which generally consists of 16 sectors. When some of the currently recorded encoding block is recorded in the next ECC block, data recorded in the next ECC block is lost. Accordingly, the entire ECC block may not be reproduced.

US 6,137,756 discloses an information recording technique for detecting erroneous recording in which synchronizing information and positional information are detected. A synchronizing timing signal is produced to estimate the occurrence of erroneous recording. This document forms the pre-characterising portion of the claims appended hereto.

With a view to solve or reduce the above problems, it is an aim of embodiments of the present invention to provide a block boundary violation method for detecting whether an encoding block is consistent with the recording block of a disk.

It is another aim of embodiments of the present invention to provide an apparatus for the above method.

According to a first aspect of the invention, there is provided a method for recording data encoded in a recordable disk, in which a block address is recorded, comprising the steps of: (a) generating a block boundary signal showing the boundary of an error correction code (ECC) block using block address information previously recorded on a disk; characterized by: (b) detecting a phase difference between the block boundary signal and a synchronous signal of an encoding block and detecting whether violation of a boundary occurs according to the magnitude of the detected phase difference.

According to a second aspect of the present invention, there is provided an apparatus for detecting violation of a block boundary in an apparatus for recording data encoded in a recordable disk, in which a block address is recorded, comprising: a decoder for generating a block boundary signal showing the boundary of an ECC block using block address information previously recorded on a disk; and an encoder for adding an error correction code to data provided thereto, generating an encoding block, and outputting the encoding block together with an encoder block synchronous signal (a frame synchronous signal); characterized by: a boundary violation detector for detecting the phase difference between the block boundary signal and the synchronous signal of the encoding signal and detecting whether violation of a boundary occurs according to the magnitude of the detected phase difference.

For a better understanding of the invention, and to show how embodiments of the same may be carried into effect, reference will now be made, by way of example, to the accompanying diagrammatic drawings in which:
Figures 1A through 1C show how data is recorded on a disk;
Figure 2 is a block diagram showing a preferred embodiment of an apparatus for detecting the violation of a block boundary according to the present invention; and
Figures 3A through 3H are timing diagrams showing the operations of the apparatus shown in Figure 2.

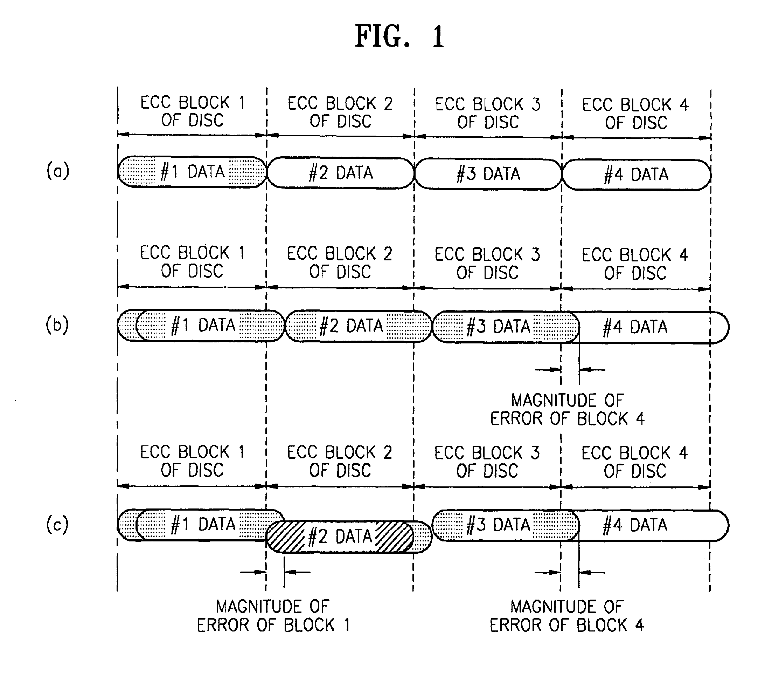

Figures 1A through 1C show how data is recorded on a disk. Figure 1A shows how normal recording is performed. Figures 1B and 1C show cases of abnormal recording.

Data is recorded on a disk in each error correction code (ECC) block. The ECC block generally consists of 16 sectors. Data is cut according to the size of the ECC block, is error correction encoded, and then recorded.

The data corresponding to the ECC block is called an encoding block. The encoding block can be normally reproduced when it is recorded from the start of the ECC block on the disk, as shown in Figure 1A.

Figure 1B shows a case where the encoding block is abnormally recorded in the three ECC blocks from the start. Namely, the recording of #1 DATA starts at a position after the start of the ECC block 1 and ends at a position after the boundary between the ECC block 1 and the ECC block 2. The recording of #2 DATA starts at a position after the ECC block 2 and ends at a position after the boundary between the ECC block 2 and the ECC block 3. The recording of #3 DATA starts at a position after the ECC block 3 and ends at a position after the boundary between the ECC block 3 and the ECC block 4. Therefore, errors corresponding to regions from the boundaries between the ECC blocks to the positions where data starts to be recorded occur. Accordingly, normal reproduction of data does not occur.

Figure 1C shows a case where abnormal recording overlaps with normal recording. Namely, the recording of the #1 DATA starts at a position after the start of the ECC block 1 and ends at a position after the boundary between the ECC block 1 and the ECC block 2. The #2 DATA is normally recorded in the ECC block 2. The recording of the #3 DATA starts at a position after the ECC block 3 and ends at a position after the boundary between the ECC block 3 and the ECC block 4. The #4 DATA is normally recorded in the ECC block 4. Accordingly, an error corresponding to a region from the start of the second ECC block to the position where the recording of #1 DATA is terminated and an error corresponding to a region from the start of the fourth ECC block to the position where the recording of #3 DATA is terminated occur. Accordingly, normal reproduction of data does not occur.

The frame synchronous signal of a digital versatile disk (DVD) is recorded in units of 1488 channel bits in order to obtain byte synchronization of data. Errors of about several frames are caused since data cannot be normally demodulated by a byte synchronization error at the boundary between the block 1 and the block 2, at the boundary between the block 2 and the block 3, and at the boundary between the block 3 and the block 4.

Such a phenomenon occurs since the encoding block cannot be recorded from the position on the disk where the ECC block starts, or the encoding block is recorded in the next ECC block on the disk. Accordingly, it is necessary to determine whether the start of the encoding block is consistent with the start of the ECC block on the disk and to perform recording according to the determination result.

According to the method for detecting the violation of a block boundary as proposed herein, it is determined whether the violation of a boundary occurs by comparing block address information previously recorded on the disk with the synchronous signal of the encoding block.

The method for detecting the violation of a block boundary is performed as follows.

In a first step, a block boundary signal showing the boundaries between the ECC blocks is generated using the block address information recorded on the disk.

Each of a DVD-R/RW disk and a DVD+RW disk includes a land and a groove. In the DVD-R/RW disk, the address information of the ECC blocks, which is referred to as a land pre-pit (LPP), is generally recorded in the land. In the DVD+RW, the address information of the ECC blocks, which is referred to as an address in pre-groove (ADIP), is recorded in a wobble signal. The ADIP is referred to as ATIP in a CD-RW disk.

In a second step, the phase difference between the block boundary signal generated in the first step and the synchronous signal of the encoding block is detected and whether a violation of a boundary occurs is detected according to the magnitude of the detected phase difference.

When the phase of the block boundary signal is consistent with the phase of the synchronous signal of the encoding block, the encoding block is recorded from the boundaries between the ECC blocks on the disk, which is normal recording. When the phase of the block boundary signal is inconsistent with the phase of the synchronous signal of the encoding block, the encoding block is not recorded from the boundaries between the ECC blocks on the disk, which is abnormal recording. In this case, recording is stopped by generating an interrupt signal or necessary measures are taken.

In actual recording, the block boundary signal must correspond exactly with the synchronous signal of the encoding block in units of bits. However, since an error of about several bits is absorbed by an error correction technique, an allowable margin can be maintained to some extent in comparing the phase of the block boundary signal with the phase of the synchronous signal of the encoding block.

Therefore, it is determined whether the phase of the block boundary signal is consistent with the phase of the synchronous signal of the encoding block by a window signal having a width determined by considering the allowable margin.

To be specific, window signals are generated on the basis of the block boundary signal. A first window signal detects whether the phase of the block boundary signal leads the phase of the synchronous signal of the encoding block. A second window signal detects whether the block boundary signal and the synchronous signal of the encoding block exist within an allowable range. A third window signal detects whether the phase of the block boundary signal lags the phase of the synchronous signal of the encoding block.

The second window signal has a width determined by considering the allowable margin on the basis of the block boundary signal. The first window signal continues from the middle of the previous ECC block to the start of the second window signal. The third window signal continues from the end of the second window signal to the middle of the next ECC block. A window width setting unit 41 controls the pulse width of the first window signal through the third window signal.

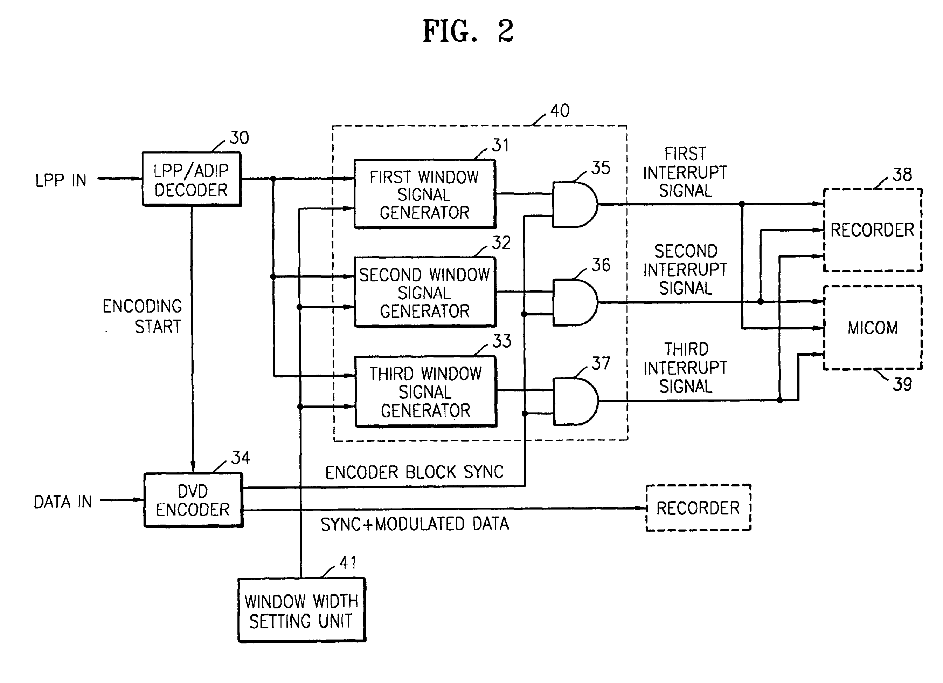

Figure 2 shows a preferred embodiment of an apparatus for detecting violation of a block boundary according to the present invention, in which the apparatus is applied to the DVD-R/RW and the DVD+RW. The apparatus shown in Figure 2 includes an LPP/ADIP decoder 30, window signal generators 31 through 33, a DVD encoder 34, and AND gates 35 through 37. The window signal generators 31 through 33 and the AND gates 35 through 37 correspond to a boundary violation detector as mentioned in the summary of the present invention and determine whether the violation of a block boundary occurs by determining the phase difference between the block boundary signal and the encoding block synchronous signal.

The LPP/ADIP decoder 30 receives an LPP signal or an ADIP signal and generates the block boundary signal. To be specific, the boundary between blocks are determined by the LPP signal or the ADIP signal. A pulse is generated at the boundary between blocks. The pulse is output as the block boundary signal.

The window signal generators 31 through 33 generate a first window signal for detecting whether the phase of the block boundary signal leads the phase of the synchronous signal of the encoding block, a second window signal for detecting whether the block boundary signal and the encoder block synchronous signal exist within the allowable range, and a third window signal for detecting whether the phase of the block boundary signal lags the phase of the synchronous signal of the encoding block. The second window signal has a width determined by considering the allowable margin on the basis of the block boundary signal. The first window signal continues from the middle of the previous ECC block to the start of the second window signal. The third window signal continues from the end of the second window signal to the middle of the next ECC block.

The DVD encoder 34 adds an error correction code to data provided thereto, generates the encoding block, and outputs the encoding block together with an encoder block synchronous signal. The encoder block synchronous signal is applied to the AND gates 35 through 37 of Figure 2.

The AND gates 35 through 37 compare the encoder block synchronous signal provided by the DVD encoder 34 with the first window signal, the second window signal, and the third window signal, which are generated by the window signal generators 31 through 33, and output the comparison result as a first interrupt signal, a second interrupt signal, and a third interrupt signal. Here, the second interrupt signal shows a state where the block boundary signal and the synchronous signal of the encoding block exist within an allowable range and normal recording can be performed. The first interrupt signal and the second interrupt signal show a state where the block boundary signal and the encoder block synchronous signal are not within the allowable range and normal recording cannot be performed.

A recorder 38 and a microprocessor 39 perform recording, stop recording, and take necessary measures according to the states of the first interrupt signal through the third interrupt signal.

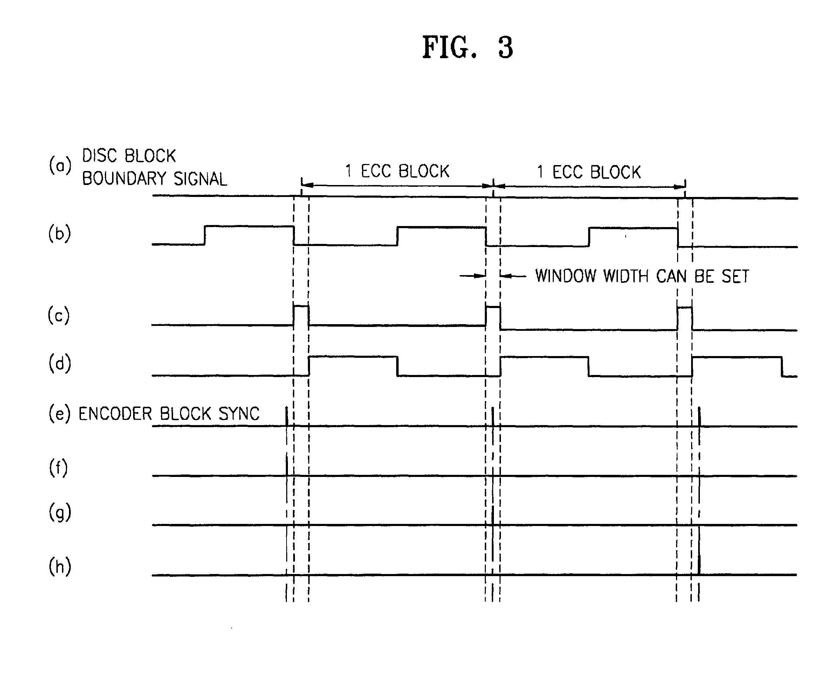

Figures 3A through 3H are timing diagrams showing the operations of the apparatus shown in Figure 2.

Figure 3A shows a block boundary signal generated by the LPP/ADIP decoder 30 of Figure 2. The block boundary signal is a mono multi-pulse signal generated at the boundary between the ECC blocks.

Figures 3B through 3D show the first window signal, the second window signal, and the third window signal, which are generated by the window signal generators 31 through 33 of Figure 2.

The second window signal has a pulse width determined by considering the allowable margin on the basis of the block boundary signal. The first window signal continues from the middle of the previous ECC block to the start of the second window signal. The third window signal continues from the end of the second window signal to the middle of the next ECC block.

Figure 3E shows the encoder block synchronous signal generated by the DVD encoder 34 of Figure 2.

Figures 3F through 3H show the first interrupt signal, the second interrupt signal, and the second interrupt signal, which are generated by the AND gates 35 through 37.

The second interrupt signal denotes a state where normal recording can be performed. The first interrupt signal and the third interrupt signal show a state where the abnormal recording is performed. The recorder 38 records the signal provided by the DVD encoder 34 in the ECC block of the disk when the second interrupt signal is generated and stops recording when the first interrupt signal and the third interrupt signal are generated. The microprocessor 39 allows normal recording to be performed by controlling a servo when the first interrupt signal and the third interrupt signal are generated.

In the embodiment shown in Figure 2, the window signal is generated on the basis of the block boundary signal and it is determined whether violation of a block boundary occurs by performing an AND operation on the window signal and the encoding block synchronous signal.

However, an apparatus for determining the phase difference between the block boundary signal and the encoding block synchronous signal and determining whether the violation of a block boundary occurs according to the magnitude of the phase difference can be realized. From this point of view, the window generators 31 through 33 and the AND gates 35 through 37 of Figure 2 correspond to the boundary violation detector in the summary of the present invention.

As mentioned above, according to the apparatus for detecting the violation of a block as described herein, data can be normally recorded by comparing the phase of the start of the encoding block with the phase of the boundary of the ECC block on the disk, thus determining whether normal recording can be performed.

## Claims

1. A method for recording data encoded in a recordable disk, in which a block address is recorded, comprising the steps of:
(a) generating a block boundary signal showing the boundary of an error correction code (ECC) block using block address information previously recorded on a disk;
**characterized by**:
(b) detecting a phase difference between the block boundary signal and a synchronous signal of an encoding block and detecting whether violation of a boundary occurs according to the magnitude of the detected phase difference.

2. The method of claim 1, wherein the step (b) comprises:
(b1) generating a window signal showing a recording allowable range on the basis of a block boundary signal; and
(b2) performing an AND operation on the window signal generated in the step (b1) and the encoding block synchronous signal and detecting whether an encoding block boundary is within an allowable range.

3. The method of claim 2, wherein the step (b) further comprises the steps of:
(b3) generating window signals for detecting whether the phase of the block boundary signal leads the phase of the synchronous signal of the encoding block or whether the phase of the block boundary signal lags the phase of the synchronous signal of the encoding block; and
(b4) detecting whether violation of a boundary occurs by performing an AND operation on the window signals generated in the step (b3) and the encoding block synchronous signal.

4. The method of claim 1, wherein the disk is one selected from the group consisting of a DVD-R disk, a DVD-RW disk, a DVD+RW disk, a CD-R disk, and a CD-RW disk.

5. An apparatus for detecting violation of a block boundary in an apparatus for recording data encoded in a recordable disk, in which a block address is recorded, comprising:
a decoder (30) for generating a block boundary signal showing the boundary of an ECC block using block address information previously recorded on a disk; and
an encoder (34) for adding an error correction code to data provided thereto, generating an encoding block, and outputting the encoding block together with an encoder block synchronous signal (a frame synchronous signal);
**characterized by**:
a boundary violation detector (40) for detecting the phase difference between the block boundary signal and the synchronous signal of the encoding signal and detecting whether violation of a boundary occurs according to the magnitude of the detected phase difference.

6. The apparatus of claim 5, wherein the boundary violation detector (40) comprises:
a second window signal generator (32) for generating a second window signal showing a recording allowable range on the basis of a block boundary signal; and
a second AND gate (36) for performing an AND operation on the second window signal and the encoding block synchronous signal and detecting whether the block boundary signal and the synchronous signal of the encoding block are within an allowable range.

7. The apparatus of claim 6, wherein the boundary violation detector further comprises:
a first window signal generator (31) and a third window signal generator (33) for generating window signals for detecting whether the phase of the block boundary signal leads the phase of the synchronous signal of the encoding block or whether the phase of the block boundary signal lags the phase of the synchronous signal of the encoding block, on the basis of the block boundary signal; and
a first AND gate (35) and a third AND gate (37) for performing an AND operation on a first window signal, a second window signal, and the encoding block synchronous signal and detecting whether the block boundary signal and the synchronous signal of the encoding block are now within the allowable range.

8. The apparatus of claim 5, wherein the disk is one selected from the group consisting of a DVD-R disk, a DVD-RW disk, a DVD+RW disk, a CD-R disk, and a CD-RW disk.

## Patentansprüche

1. Verfahren zum Aufzeichnen von in einem bespielbaren Datenträger codierten Daten, bei dem eine Blockadresse aufgezeichnet wird, mit den folgenden Schritten:
(a) Erzeugen eines die Grenze eines Blocks von Fehlerkorrekturcode (ECC) zeigenden Blockgrenzensignals unter Verwendung von zuvor auf einem Datenträger aufgezeichneten Blockadresseninformationen;
**gekennzeichnet durch**
(b) Detektieren einer Phasendifferenz zwischen dem Blockgrenzensignal und einem synchronen Signal eines Codierungsblocks und Detektieren, ob eine Verletzung einer Grenze auftritt, gemäß dem Betrag der detektierten Phasendifferenz.

2. Verfahren nach Anspruch 1, wobei Schritt (b) Folgendes umfasst:
(b1) Erzeugen eines einen zulässigen Bereich der Aufzeichnung zeigenden Fenstersignals auf der Basis eines Blockgrenzensignals; und
(b2) Ausführen einer AND-Operation an dem im Schritt (b1) erzeugten Fenstersignal und dem synchronen Signal des Codierungsblocks und Detektieren, ob eine Codierungsblockgrenze in einem zulässigen Bereich liegt.

3. Verfahren nach Anspruch 2, wobei Schritt (b) ferner die folgenden Schritte umfasst:
(b3) Erzeugen von Fenstersignalen zum Detektieren, ob die Phase des Blockgrenzensignals der Phase des synchronen Signals des Codierungsblocks vorauseilt oder ob die Phase des Blockgrenzensignals der Phase des synchronen Signals des Codierungsblocks nacheilt; und
(b4) Detektieren, ob eine Verletzung der Grenze auftritt, durch Ausführen einer AND-Operation an den im Schritt (b3) erzeugten Fenstersignalen und dem synchronen Signal des Codierungsblocks.

4. Verfahren nach Anspruch 1, wobei der Datenträger ein aus der folgenden Gruppe ausgewählter Datenträger ist: ein DVD-R-Datenträger, ein DVD-RW-Datenträger, ein DVD+RW-Datenträger, ein CD-R-Datenträger und ein CD-RW-Datenträger.

5. Vorrichtung zum Detektieren einer Verletzung einer Blockgrenze in einer Vorrichtung zum Aufzeichnen von in einem bespielbaren Datenträger codierten Daten, bei der eine Blockadresse aufgezeichnet wird, umfassend:
einen Decodierer (30) zum Erzeugen eines die Grenze eines ECC-Blocks zeigenden Blockgrenzensignals unter Verwendung von zuvor auf einem Datenträger aufgezeichneten Blockadresseninformationen; und
einen Codierer (34) zum Hinzufügen eines Fehlerkorrekturcodes zu diesen zugeführten Daten, Erzeugen eines Codierungsblocks und Ausgeben des Codierungsblocks zusammen mit einem synchronen Signal des Codiererblocks (einem rahmensynchronen Signal);
**gekennzeichnet durch**
einen Grenzenverletzungsdetektor (40) zum Detektieren der Phasendifferenz zwischen dem Blockgrenzensignal und dem synchronen Signal des Codierungssignals und zum Detektieren, ob eine Verletzung einer Grenze auftritt, gemäß dem Betrag der detektierten Phasendifferenz.

6. Vorrichtung nach Anspruch 5, wobei der Grenzenverletzungsdetektor (40) Folgendes umfasst:
einen zweiten Fenstersignalgenerator (32) zum Erzeugen eines zweiten einen zulässigen Bereich der Aufzeichnung zeigenden Fenstersignals auf der Basis eines Blockgrenzensignals; und
ein zweites AND-Gatter (36) zum Ausführen einer AND-Operation an dem zweiten Fenstersignal und dem synchronen Signal des Codierungsblocks und zum Detektieren, ob das Blockgrenzensignal und das synchrone Signal des Codierungsblocks in einem zulässigen Bereich liegen.

7. Vorrichtung nach Anspruch 6, wobei der Grenzenverletzungsdetektor ferner Folgendes umfasst:
einen ersten Fenstersignalgenerator (31) und einen dritten Fenstersignalgenerator (33) zum Erzeugen von Fenstersignalen zum Detektieren, ob die Phase des Blockgrenzensignals der Phase des synchronen Signals des Codierungsblocks vorauseilt oder ob die Phase des Blockgrenzensignals der Phase des synchronen Signals des Codierungsblocks nacheilt, auf der Basis des Blockgrenzensignals; und
ein erstes AND-Gatter (35) und ein drittes AND-Gatter (37) zum Ausführen einer AND-Operation an einem ersten Fenstersignal, einem zweiten Fenstersignal und dem synchronen Signal des Codierungsblocks und zum Detektieren, ob das Blockgrenzensignal und das synchrone Signal des Codierungsblocks nun in einem zulässigen Bereich liegen.

8. Vorrichtung nach Anspruch 5, wobei der Datenträger ein aus der folgenden Gruppe ausgewählter Datenträger ist: ein DVD-R-Datenträger, ein DVD-RW-Datenträger, ein DVD+RW-Datenträger, ein CD-R-Datenträger und ein CD-RW-Datenträger.

## Revendications

1. Procédé pour enregistrer des données codées sur un disque enregistrable sur lequel on enregistre une adresse de bloc, comprenant les étapes consistant à :
(a) générer un signal de limite entre blocs indiquant la limite d'un bloc de code de correction d'erreurs (ECC) en utilisant des informations d'adresse de blocs précédemment enregistrées sur un disque ;
**caractérisé par** :
(b) le fait de détecter un déphasage entre le signal de limite entre blocs et un signal de synchronisation d'un bloc de codage et le fait de détecter si la violation d'une limite se produit en fonction de la valeur du déphasage détecté.

2. Procédé selon la revendication 1, dans lequel l'étape (b) consiste à :
(b1) générer un signal de fenêtre représentant une plage d'enregistrement admissible sur la base d'un signal de limite entre blocs ; et
(b2) exécuter une opération ET sur le signal de fenêtre généré lors de l'étape (b1) et sur le signal de synchronisation de bloc de codage et détecter si une limite entre blocs de codage se situe à l'intérieur d'une plage admissible.

3. Procédé selon la revendication 2, dans lequel l'étape (b) comprend en outre les étapes consistant à :
(b3) générer des signaux de fenêtre pour détecter si la phase du signal de limite entre blocs est en avance sur la phase du signal de synchronisation du bloc de codage ou si la phase du signal de limite entre blocs est en retard sur la phase du signal de synchronisation du bloc de codage ; et
(b4) détecter si une violation d'une limite se produit en effectuant une opération ET sur les signaux de fenêtre générés lors de l'étape (b3) et sur le signal de synchronisation de bloc de codage.

4. Procédé selon la revendication 1, dans lequel le disque est un disque sélectionné dans le groupe constitué d'un disque DVD-R, d'un disque DVD-RW, d'un disque DVD+RW, d'un disque CD-R et d'un disque CD-RW.

5. Appareil pour détecter une violation d'une limite entre blocs dans un appareil destiné à enregistrer des données codées sur un disque enregistrable, dans lequel on enregistre une adresse de bloc, comprenant :
un décodeur (30) pour générer un signal de limite entre blocs représentant la limite d'un bloc ECC en utilisant des informations d'adresses de blocs précédemment enregistrées sur un disque ; et
un codeur (34) pour ajouter un code de correction d'erreurs aux données qui lui sont fournies, générer un bloc de codage, et fournir en sortie le bloc de codage en association avec un signal de synchronisation de bloc de codage (un signal de synchronisation de trame) ;
**caractérisé par** :
un détecteur de violation de limite (40) pour détecter le déphasage entre le signal de limite entre blocs et le signal de synchronisation du signal de codage et détecter s'il se produit une violation d'une limite en fonction du niveau du déphasage détecté.

6. Appareil selon la revendication 5, dans lequel le détecteur de violation de limite (40) comprend :
un second générateur de signal de fenêtre (32) destiné à générer un second signal de fenêtre représentant la plage admissible d'enregistrement sur la base d'un signal de limite entre blocs ; et
une seconde porte ET (36) pour effectuer une opération ET sur le second signal de fenêtre et sur le signal de synchronisation de bloc de codage et pour détecter si le signal de limite entre blocs et le signal de synchronisation du bloc de codage se situent à l'intérieur d'une plage admissible.

7. Appareil selon la revendication 6, dans lequel le détecteur de violation de limite comprend en outre :
un premier générateur de signal de fenêtre (31) et un troisième générateur de signal de fenêtre (33) pour générer des signaux de fenêtre afin de détecter si la phase du signal de limite entre blocs est en avance sur la phase du signal de synchronisation du bloc de codage ou si la phase du signal de limite entre blocs est en retard sur la phase du signal de synchronisation du bloc de codage, sur la base du signal de limite entre blocs ; et
une première porte ET (35) et une troisième porte ET (37) pour effectuer une opération ET sur un premier signal de fenêtre, sur un second signal de fenêtre, et sur le signal de synchronisation de bloc de codage et pour détecter si le signal de limite entre blocs et le signal de synchronisation du bloc de codage se situent maintenant à l'intérieur de la plage admissible.

8. Appareil selon la revendication 5, dans lequel le disque est un disque sélectionné dans le groupe constitué d'un disque DVD-R, d'un disque DVD-RW, d'un disque DVD+RW, d'un disque CD-R et d'un disque CD-RW.
